# EUROPEAN PATENT APPLICATION

(11) **EP 4 521 517 A1**
(43) Date of publication of application: **12.03.2025**
(21) Application number: 24164916.9
(22) Date of filing: 20.03.2024
(51) Int. Cl.: H01M 50/102, H01M 50/342, H01M 50/367

(54) **BATTERY CELL AND MANUFACTURING METHOD OF THE SAME**

(30) Priority: 11.09.2023 KR 20230120315
(71) Applicant: SK On Co., Ltd., Seoul 03161 (KR)
(72) Inventor: CHEONG, Hoemin, 34124 Daejeon (KR); KWAK, Seung Ho, 34124 Daejeon (KR); JU, Seung Hoon, 34124 Daejeon (KR)
(74) Representative: Stolmár & Partner Patentanwälte PartG mbB

(57) **Abstract**

A battery cell of the present disclosure includes an electrode assembly including a cathode, an anode, and a separator; an exterior material accommodating the electrode assembly therein; a notch portion recessed from an inner surface of the exterior material toward an outside and defined in the form of a groove; and a protrusion portion corresponding to the notch portion on an outer surface of the exterior material disposed in an opposite direction of the inner surface and protruding toward the outside.

## Description

### BACKGROUND OF THE INVENTION

### 1. Field

The present disclosure relates to a battery cells and a manufacturing method of the same. Specifically, it relates to a battery cell having a groove-shaped notch portion and a method of manufacturing the same.

### 2. Description of the Related Art

A secondary battery is a battery that is made to convert electrical energy into chemical energy and store it so that it may be reused multiple times through charging and discharging. Secondary batteries are widely used across industries due to their economical and eco-friendly characteristics. In particular, among secondary batteries, lithium secondary batteries are widely used throughout industries, including portable devices that require high-density energy.

The operating principle of lithium secondary batteries is an electrochemical oxidation-reduction reaction. In other words, the principle is that electricity is generated through the movement of lithium ions and charged in the reverse process. In the case of a lithium secondary battery, a phenomenon in which lithium ions in an anode escape therefrom and move to a cathode through an electrolyte and a separator is referred to as discharge. In addition, the opposite process of this phenomenon is referred to as charging.

As the process of charging and discharging a secondary battery is repeated, a swelling phenomenon in which the internal pressure is increased and a large amount of heat is generated may occur. Since this swelling phenomenon may lead to explosion or fire, a method for controlling the internal pressure of secondary batteries is required.

### SUMMARY OF THE INVENTION

A problem that the present disclosure aims to solve is to provide a battery cell in which the internal pressure is controlled to exhibit improved stability.

In addition, another problem that the present disclosure aims to solve is to provide a battery cell manufacturing method in which a notch portion is manufactured integrally with an exterior material to exhibit improved production efficiency.

The battery cell of the present disclosure can be widely applied in the field of green technology, such as electric vehicles, battery charging stations, solar power generation, and wind power generation using batteries. In addition, the battery cell of the present disclosure can be used in eco-friendly electric vehicles, hybrid vehicles, etc. to prevent climate change by suppressing air pollution and greenhouse gas emissions.

A battery cell of the present disclosure includes: an electrode assembly including a cathode, an anode, and a separator; an exterior material accommodating the electrode assembly therein; a notch portion recessed from an inner surface of the exterior material toward the outside and defined in the form of a groove; and a protrusion portion corresponding to the notch portion on an outer surface of the exterior material disposed in an opposite direction of the inner surface and protruding toward the outside.

The exterior material may include: a body portion accommodating the electrode assembly; and a cap portion including a cell tab that electrically connects the electrode assembly to the outside and covering the body portion; wherein the notch portion may be provided in the body portion.

The exterior material may further include a venting portion formed by recession of at least one of the inner surface and the outer surface that is provided in a direction opposite to the inner surface, wherein the notch portion and the venting portion may be positioned to overlap along a recession direction in which the at least one surface is recessed.

The notch portion and the protrusion portion may be formed integrally with the exterior material.

The notch portion and the protrusion portion may include a same material as the exterior material.

The venting portion may have a part provided in a stepped shape.

The battery cell may further include a protrusion portion corresponding to the notch portion on an outer surface of the exterior material disposed in an opposite direction of the inner surface and protruding toward the outside.

The notch portion may be formed to extend along one direction from the inner surface.

The shapes of the notch portion and the protrusion portion may change based on the internal pressure of the exterior material.

When the internal pressure of the exterior material increases, the notch portion and the protrusion portion may be opened.

The length from the notch portion to the protrusion portion along a direction in which the notch portion is recessed may be 40% or less of the length of the exterior material.

The notch portion may be provided in a plural number.

The protrusion portion may protrude beyond an outer surface of the exterior material along a direction from an inner surface of the exterior material to an outer surface of the exterior material.

The battery cell manufacturing method of the present disclosure includes: a notching step of providing a notch portion recessed from an inner surface of the exterior material toward the outside and defined in the form of a groove; an inserting step of inserting the electrode assembly into the body portion; and a covering step of covering an opening portion provided in the body portion by the cap portion.

The battery cell manufacturing method of the present disclosure may further include a venting portion forming step of forming a venting portion by pressurizing at least one surface of an inner surface of the exterior material on which the notch portion is provided and an outer surface of the exterior material.

The notching step may include: a forging step of forming a notch portion and a protrusion portion in an notch area of the exterior material; a bending step of bending the exterior material along a bent area of the exterior material; and a connecting step of connecting two different areas of the exterior material.

In the forging step, a first pressurizing portion, at least a part of which protrudes, may pressurize one surface of the exterior material, and a second pressurizing section, one area of which is recessed, may pressurize the other surface of the exterior material.

Through an embodiment of the present disclosure a battery cell with improved stability can be provided by adjusting the internal pressure.

In addition, the invention of the present disclosure may provide a battery cell manufacturing method in which a notch portion is manufactured integrally with an exterior material to exhibit improved production efficiency.

### BRIEF DESCRIPTION OF THE DRAWINGS

FIGS. 1 and 2 show a battery cell according to an embodiment of the present disclosure.
FIGS. 3 to 6 show a notch portion according to an embodiment of the present disclosure.
FIGS. 7 to 9 show a battery cell according to another embodiment of the present disclosure.
FIGS. 10A to 10C show various embodiments of a notch portion of the present disclosure.
FIGS. 11 and 12 show a battery cell manufacturing method according to an embodiment of the present disclosure.
FIGS. 13 to 15 show each step of a battery cell manufacturing method according to an embodiment of the present disclosure.

### DETAILED DESCRIPTION

Hereinafter, the present disclosure will be described in detail with reference to the attached drawings. This is merely illustrative, and the present disclosure is not limited to the specific embodiments described in an illustrative manner.

Specific terms used in the present specification are merely for convenience of explanation and are not used to limit the illustrated embodiments.

For example, expressions such as "same" and "is the same" not only indicate a strictly identical state, but also indicate a state in which there is a difference in tolerance or the degree to which the same function is obtained.

For example, expressions representing relative or absolute arrangement such as "in a certain direction," "along a certain direction," "side by side," "perpendicularly," "at the center," "concentric," or "coaxial," not only strictly represent the arrangement, but also represent the state of relative displacement with a tolerance, or an angle or distance at which the same function is obtained.

To explain the present disclosure, it will be described below based on a spatial orthogonal coordinate system with X, Y, and Z axes orthogonal to each other. Each axis direction (X-axis direction, Y-axis direction, Z-axis direction) refers to both directions in which each axis extends.

The X-direction, Y-direction, and Z-direction mentioned below are for explanation so that the present disclosure may be clearly understood, and of course, the directions may be defined differently depending on where the reference is placed.

The use of terms such as 'first, second, and third' in front of the components mentioned below is only to avoid confusion about the components to which they are referred and is irrelevant to the order, importance, or master-slave relationship between the components, etc. For example, an invention that includes only a second component without a first component may also be implemented.

As used in this specification, singular expressions include plural expressions unless the context clearly dictates otherwise.

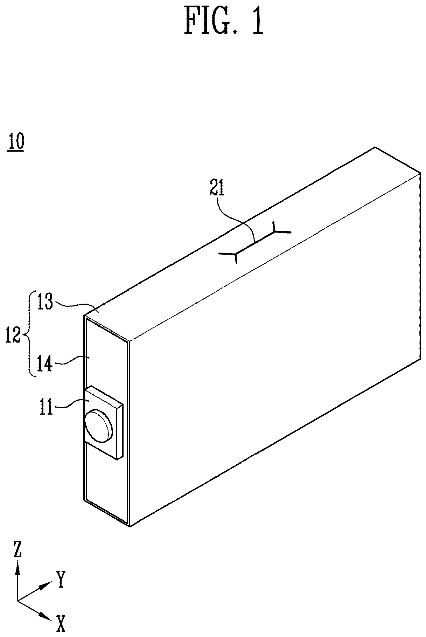

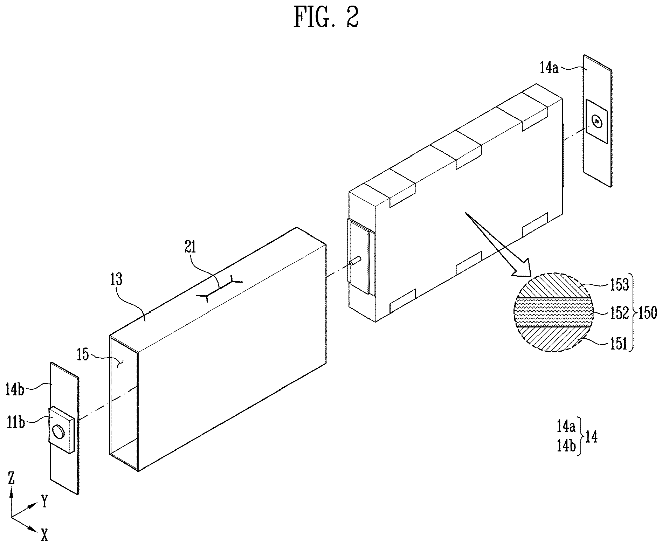

FIGS. 1 and 2 show a battery cell 10 according to an embodiment of the present disclosure.

A battery cell 10 described in the present specification refers to a secondary battery that may be repeatedly used by charging and discharging electrical energy. For example, a battery cell may be a lithium secondary battery, but it is not limited thereto.

Battery cells 10 may be classified into a pouch-type secondary battery, a prismatic secondary battery, or a cylindrical secondary battery depending on the shape. Referring to FIG. 1, in the present specification, a prismatic secondary battery is shown as an example for convenience of explanation, but the present invention is not limited thereto.

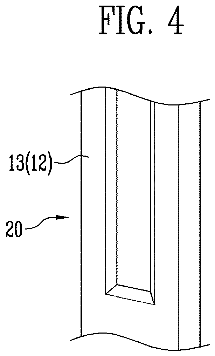

A battery cell 10 of the present disclosure includes: an electrode assembly 150 including a cathode, an anode, and a separator; an exterior material 12 accommodating the electrode assembly therein 150, a notch portion 20 (FIG. 4) recessed from an inner surface of the exterior material 12 toward the outside in a direction to the electrode assembly 150 and defined in the form of a groove; and a protrusion portion 21.

A battery cell 10 includes an electrode assembly 150. Referring to FIG. 2, an electrode assembly 150 may include a cathode 151, an anode 153, and a separator 152. An electrode assembly 150 may be classified into a stack type, a winding type, a stack-folding type, and a Z-stacking type depending on the method by which a cathode 151, an anode 153, and a separator 152 are stacked.

The type of an electrode assembly 150 included in the battery cell 10 of the present disclosure is not limited. In other words, an electrode assembly 150 included in the battery cell of the present disclosure may be an electrode assembly 150 manufactured in any one method of a stack type, a winding type, a stack-folding type, and a Z-stacking type.

A cathode 151 and an anode 153 may include a current collector. A cathode 151 may include a cathodecurrent collector, and an anode 153 may include an anode current collector. A current collector may include a known conductive material to an extent that it does not cause a chemical reaction within a lithium secondary battery. For example, a current collector may include any one of stainless steel, nickel (Ni), aluminum (Al), titanium (Ti), copper (Cu), and alloys thereof, and may be provided in various forms such as a film, a sheet, a foil, and the like.

A cathode 151 and an anode 153 may include an active material. A cathode 151 may include a cathode active material, and an anode may include an anode active material. A cathode active material is a material which lithium (Li) ions may be inserted into and extracted from, and an anode active material is a material which lithium ions may be adsorbed into and extracted from. For example, a cathode active material may be lithium metal oxide, and an anode active material may be any one of a carbon-based material such as crystalline carbon, amorphous carbon, carbon composite, and carbon fiber, a lithium alloy, silicon (Si), and tin (Sn).

In addition, a cathode 151 and an anode 153 may further include a binder and a conductive material to improve mechanical stability and electrical conductivity, respectively.

A separator 152 may be configured to prevent an electrical short circuit between a cathode 151 and an anode 153 and to generate a flow of ions. The type of a separator is not particularly limited, but may include a porous polymer film. For example, a separator may include a porous polymer film or a porous nonwoven fabric.

An electrolyte may include an electrolyte solution. An electrolyte solution may be a non-aqueous electrolyte solution. An electrolyte solution may include a lithium salt and an organic solvent. An electrolyte solution may further include an additive. An additive may form a film on a cathode or an anode through a chemical reaction inside a battery. For example, a cathode interface film may be formed on a cathode, and an anode interface film may be formed on an anode.

Referring to FIG. 2, an exterior material 12 may accommodate an electrode assembly 150 therein. An exterior material 12 may accommodate an electrode assembly and an electrolyte solution therein. An exterior material 12 may be provided with an external insulating layer made of a polymer material, an internal adhesive layer, and a metal layer interposed between an external insulating layer and an internal adhesive layer. An exterior material 12 may include a material with high mechanical rigidity to protect a battery cell 10 from external shock. For example, an exterior material may include an aluminum layer.

An exterior material 12 may include a body portion 13 accommodating an electrode assembly; and a cap portion 14a, 14b covering a body portion 13. The cap portion 14 may include a cell tab 11 electrically connecting an electrode assembly to the outside.

Referring to FIG. 2, a body portion 13 may include an open opening portion 15. A body portion 13 may be open on both sides. Referring to FIG. 2, both sides of a body portion 13 may be open toward the Y-direction. An electrode assembly and an electrolyte may be accommodated inside an exterior material 12 through an opening portion 15. For example, a body portion 13 may be provided in a hexahedral shape so that both sides may be open along the Y-direction. A cap portion 14 may cover both open surfaces of a body portion 13. A body portion 13 and a cap portion 14 may be combined to close an accommodation space of an exterior material 12.

A cap portion 14a, 14b may cover a body portion 13. In other words, a cap portion 14a, 14b may cover both open surfaces of a body portion 13 to protect components accommodated within a body portion 13. A body portion 13 and a cap portion 14a, 14b may be coupled or sealed with each other.

A battery cell 10 may further include a cell tab 11 protruding toward the outside of an exterior material 12 for electrical connection to the outside. A cell tab 11 may be provided in a cap portion 14. A battery cell 10 may include a plurality of cap portions 14a, 14b and a plurality of cell tabs 11a, 11b. Each cell tab 11a, 11b may be provided in each of a plurality of cap portions 14a, 14b.

A cell tab 11 may each be connected to a cathode and an anode of a battery cell 10. A cell tab 11 may include a cathode tab 11a connected to a cathode and an anode tab 11b connected to an anode.

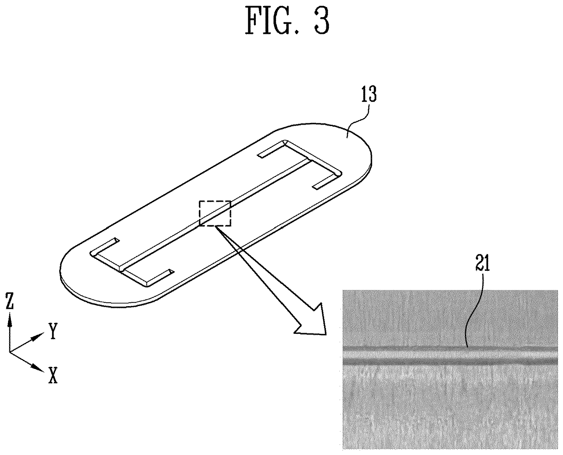

FIGS. 3 to 6 show a notch portion according to an embodiment of the present disclosure.

Referring to FIG. 3, a battery cell 10 of the present disclosure may include a protrusion portion 21 protruding toward the outside from an outer surface of an exterior material. A protrusion portion 21 may protrude beyond an outer surface of an exterior material.

FIG. 4 shows an inner surface of a battery cell on which a notch portion is formed. Referring to FIG. 4, a battery cell 10 of the present disclosure may include a notch portion 20 recessed from an inner surface of an exterior material 12 toward the outside and defined in the form of a groove. A notch portion 20 may be formed to overlap a protrusion portion 21 along a direction from the inside of a battery call toward the outside.

A battery cell 10 of the present disclosure may include a notch portion 20 provided on one surface of an exterior material 12. A notch portion 20 may be provided on an inner surface of an exterior material 12. A notch portion 20 may be provided in a body portion 13 of an exterior material 12.

A notch portion 20 may be defined in the form of a groove from an inner surface toward the outside. In other words, a notch portion 20 may be recessed from an inner surface toward the outside to be defined in the form of a groove.

An exterior material 12 may include an internal space accommodating an electrode assembly. An inner surface of an exterior material 12 may form one side surface of an internal space. That is, a notch portion 20 may be formed by being recessed in a preset depth from the inside of an exterior material 12 toward the outside.

A battery cell 10 of the present disclosure may adjust the internal pressure through a notch portion 20. A battery cell 10 may be used multiple times by repeatedly charging and discharging. The internal pressure of a battery cell 10 may increase due to a gas generated in this process. When a gas is continuously left without being discharging, a battery cell 10 may explode. Therefore, in order to use a battery cell 10 safely, it is necessary to properly adjust the pressure of a battery cell 10.

A notch portion 20 may be provided on one side of an exterior material 12 so that a gas may be discharged through the notch portion 20. In other words, the shape of a notch portion 20 may change based on the internal pressure of an exterior material 12. In addition, the shape of a protrusion portion 21 may change based on the internal pressure of an exterior material 12.

When the internal pressure of an exterior material 12 increases and reaches a fracture pressure, a notch portion 20 and a protrusion portion 21 may be opened. Fracture pressure refers to a pressure at which a notch portion 20 and a protrusion portion 21 may be fractured and opened.

Therefore, when the internal pressure of an exterior material 12 is lower than a fracture pressure, the shape of a notch portion 20 will be maintained. When the internal pressure of an exterior material 12 increases above a fracture pressure through continuous use of a battery cell, the shape of a notch portion 20 may change. Specifically, a notch portion 20 may be opened and a gas inside may be discharged to the outside, thereby causing the internal pressure to decrease.

A notch portion 20 may be fractured even at a relatively low pressure compared to other areas of a battery cell. Through this, damage to a battery cell 10 can be prevented. Fracture of areas other than a notch portion 20 of a battery cell 10 may be prevented.

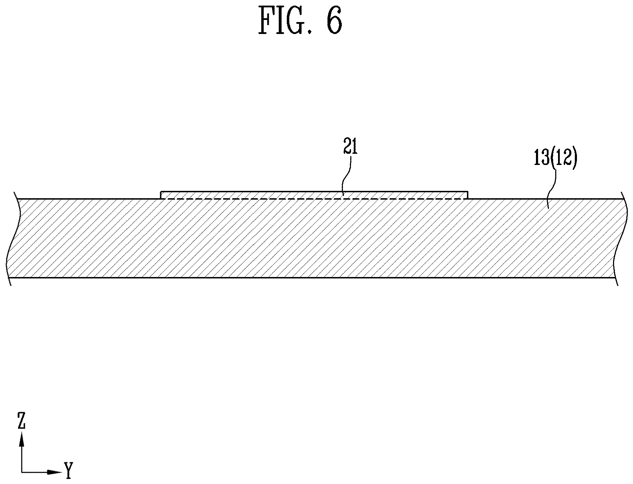

A notch portion 20 may be formed to extend along one direction on an inner surface. For example, referring to FIG. 6, a notch portion 20 may be formed to extend along the Y-direction. At least a part of a notch portion 20 may be formed to extend along one direction. Through this, both sides of a notch portion 20 will be spaced apart so that a gas inside can be easily discharged.

A notch portion 20 may be provided in a plural number. Through this, the pressure of a battery cell 10 can be quickly lowered to prevent explosion of a battery cell 10.

In particular, a battery cell 10 of the present disclosure may be provided with a notch portion 20 on an inner surface of an exterior material 12. Since a notch portion 20 is provided on an inner surface of an exterior material 12 rather than an outer surface, it can sensitively respond to pressure changes. When a notch portion 20 is provided on an outer surface, an inner surface is still provided as a flat surface and may not be opened even when the internal pressure changes. In other words, an open form that is different from design intention of a battery cell may be implemented.

On the other hand, when a notch portion 20 is provided on an inner surface, upon a pressure increase, a notch portion 20 may be pressurized, causing a crack in a notch portion 20. When the internal pressure gradually increases and reaches a fracture pressure, a notch portion 20 provided on an inner surface will be easily opened.

A notch portion 20 may be provided in a body portion 13. A notch portion 20 may be formed integrally with a body portion 13. In other words, a notch portion 20 may be formed through press processing in a preset area of a body portion 13, rather than being manufactured separately and then joined to a body portion 13.

A body portion 13 may be formed to be thin by a cap portion 14a, 14b. A notch portion 20 may be formed in a body portion 13 to facilitate molding. In addition, when a notch portion 20 is formed by press processing, a notch portion 20 may be molded in any area of a body portion. Through this, the range of position selection of a notch portion 20 will be expanded so that the position of a notch portion 20 may be freely changed according to a user's demand.

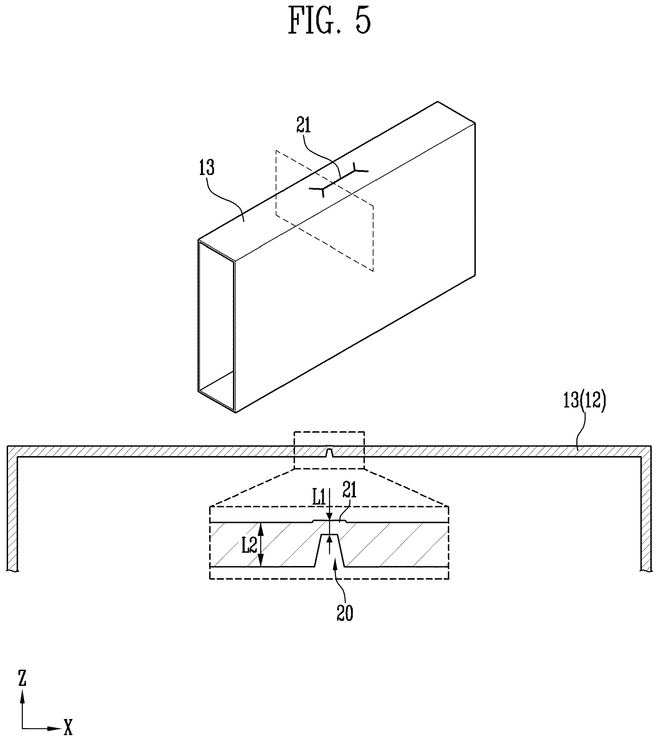

Referring to FIGS. 5 and 6, a protrusion portion 21 may be provided on an outer surface of an exterior material 12. A protrusion portion 21 corresponds to a notch portion 20 and may protrude toward the outside. In other words, a notch portion 20 and a protrusion portion 21 may be formed to overlap along a direction from an inner surface of a body portion 13 toward an outer surface.

A protrusion portion may protrude beyond an outer surface of an exterior material 12 along a direction from an inner surface of an exterior material 12 to an outer surface of the exterior material 12. Referring to FIGS. 5 and 6, a protrusion portion 21 may be positioned farther from an inner surface of an exterior material 12 than an outer surface of the exterior material 12 along the Z-direction. Through this, a user can easily predict an open portion of an exterior material 12.

A protrusion portion 21 may guide a fracture path of an exterior material. In other words, when a notch portion 20 is fractured on an inner surface of an exterior material, an outer surface of the exterior material may be fractured along the protrusion portion 21.

A protrusion portion 21 may guide a damage path of an exterior material. When a notch portion 20 is fractured and an exterior material 12 is thereby opened, the exterior material may be opened along a protrusion portion 21. Ultimately, a user can easily predict an open area of the exterior material through the protrusion portion 21 and limit the open area of the exterior material within a certain range.

The length from the notch portion to the protrusion portion along the direction in which the notch portion is recessed may be 40% or less of the length of the exterior material. In other words, referring to FIG. 5, the thickness L1 of an exterior material 12 in which a notch portion 20 is formed may be 40% or less of the thickness L2 of an exterior material 12 on which a notch portion 20 is not formed.

The length of an exterior material along the direction in which a notch portion 20 is recessed refers to the thickness of the exterior material. When a notch portion 20 is formed in a body portion 13, the thickness of an exterior material may refer to the thickness of the body portion 13. In addition, the thickness of an exterior material 12 may refer to the thickness of one surface of a body portion 13 in which a notch portion is formed.

A body portion 13 may include a plurality of surfaces, and a notch portion 20 and a protrusion portion 21 may be formed on one of the plurality of surfaces. At this time, the length of an exterior material 12 compared to the length from a notch portion to a protrusion portion may refer to the thickness of any one surface of a body portion 13 in which a notch portion 20 and a protrusion portion 21 are formed. In other words, the length of a notch portion 20 and a protrusion portion 21 may be formed to be 40% or less of the thickness of an area of a body portion adjacent to the notch portion 20 and the protrusion portion 21.

When the thickness of an exterior material in which a notch portion 20 is formed is formed to be thick, the notch portion 20 may not be fractured even when the pressure of a battery cell 10 increases. In addition, when the thickness of an exterior material in which a notch portion 20 is formed is formed to be thin, the notch portion 20 may be fractured, even when the pressure of a battery cell 10 increases relatively slightly, thereby causing inconvenience in use of the battery cell 10.

In other words, a notch portion 20 must be set to have an appropriate thickness to prevent damage to a battery cell 10 and enable the battery cell 10 to be continuously used.

A notch portion 20 and a protrusion portion 21 may be formed integrally with an exterior material 12. In other words, a notch portion 20 and a protrusion portion 21 may be manufactured through a press process in one area of an exterior material 12, rather than a notch portion 20 and a protrusion portion 21 are separately manufactured and then coupled with one area of an exterior material 12.

In addition, a notch portion 20 and a protrusion portion 21 may include a same material as an exterior material 12. For example, when an exterior material 12 includes aluminum, a notch portion 20 and a protrusion portion 21 may include aluminum. This is because a notch portion 20 and a protrusion portion 21 are formed integrally with an exterior material 12. A notch portion 20 and a protrusion portion 21 may include a same material as an exterior material 12, thereby stably protecting an electrode assembly 150 from an external pressure.

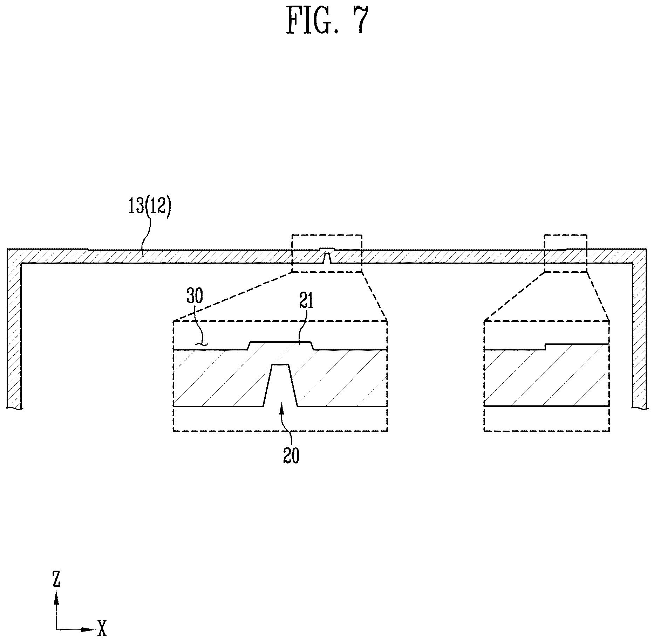

FIGS. 7 to 9 show a battery cell according to another embodiment of the present disclosure.

An exterior material 12 may further include a venting portion 30. A venting portion 30 may be formed as at least one surface of an inner surface of an exterior material 12 and an outer surface provided in a direction opposite to the inner surface is recessed.

Along a recession direction in which a venting portion 30 is recessed, a notch portion and a venting portion may be positioned to overlap. In other words, a notch portion may be positioned within a venting portion.

A venting portion 30 is intended to make an exterior material 12 thin. Through this, when the internal pressure of a battery cell 10 increases, a notch portion 20 can be easily opened.

The thickness of one area of an exterior material provided with a venting portion may be relatively thin so that it may be fractured by a lower pressure compared to one area of an exterior material provided with no venting portion.

In an embodiment, a venting portion 30 may be positioned in a body portion 13 of an exterior material 12. As a result, a gas inside a battery cell may be discharged from a body portion 13.

A battery cell 10 may be provided with a venting portion 30 having a thin thickness, thereby easily responding to a pressure change. In particular, a notch portion 20 may be positioned overlappingly with a venting portion 30 so that the notch portion 20 may respond more sensitively to a pressure change of a battery cell 10 than other areas.

Referring to FIG. 7, a venting portion 30 may be provided on an outer surface of an exterior material 12. The position of a notch portion 20 may be indirectly determined through the position of a venting portion 30. A notch portion 20 is provided on an inner surface and thus is not visually observed from the outside. Through this, the position with other battery cells 10 can be adjusted in consideration of gas emissions.

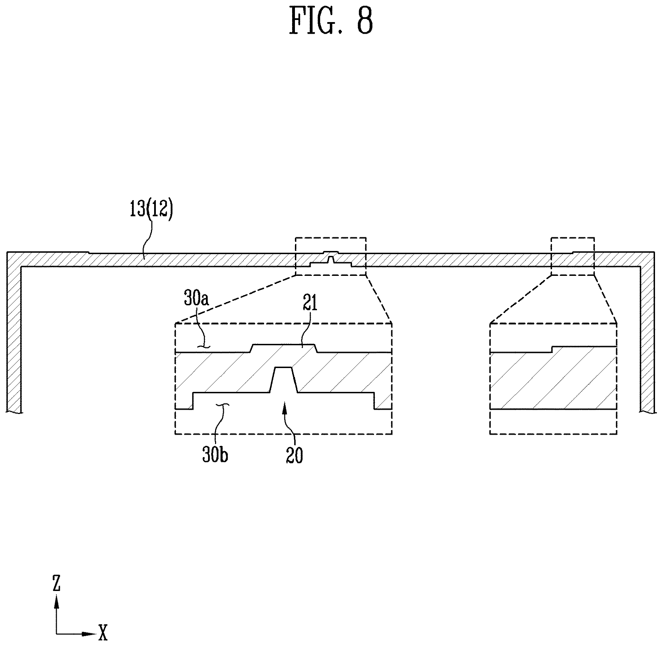

Referring to FIG. 8, a plurality of venting portions may be provided. A venting portion may include a venting portion 30a provided on an outer surface of an exterior material 12 and a venting portion 30b provided on an inner surface of an exterior material 12. In this case, a notch portion 20 may be provided on an inner surface of a venting portion 30b. An area adjacent to a notch portion 20 may have a thin thickness, thereby sensitively responding to a pressure change.

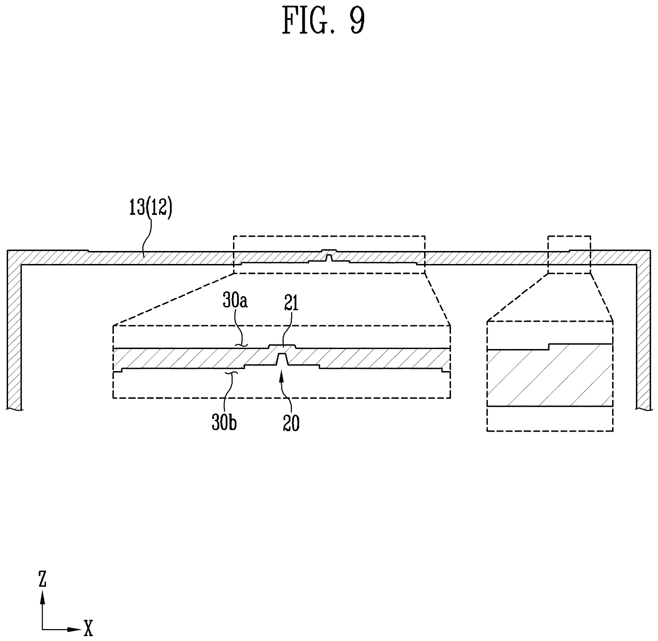

Referring to FIG. 9, a part of a venting portion 30b may be provided in a stepped shape. The recession depth of a venting portion 30b may vary depending on the direction in which it is recessed. For example, a venting portion 30b may be provided in a stepped form so that the thickness of an exterior material 12 may be sequentially thinned. Through this, the thickness of an exterior material 12 can be finely adjusted so that a notch portion 20 can sensitively respond to a pressure change.

A notch portion 20 may be formed to extend along one direction on an inner surface. A notch portion 20 may be provided in various shapes. A protrusion portion 21 corresponding to a notch portion 20 may also be provided in various shapes.

At least a part of a notch portion 20 may be formed to extend along one direction. Through this, both sides of a notch portion 20 may be spaced apart so that a gas in the inside can be easily discharged.

One side surface of a pressurizing portion that pressurizes an inner surface may be provided in a protruding shape. Through this, a protruding pressurizing portion can pressurize an inner surface to form a notch portion 20.

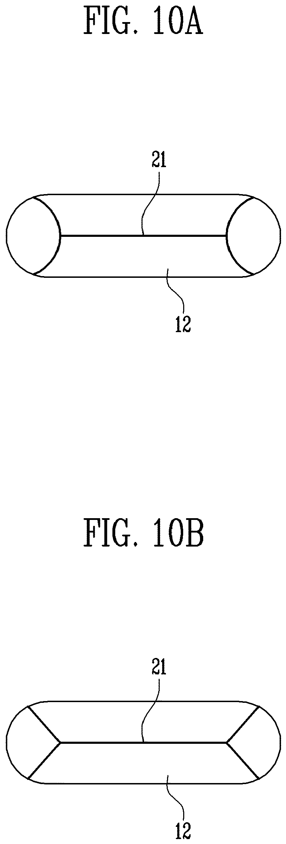

FIGS. 10A to 10C show various embodiments of a notch portion of the present disclosure.

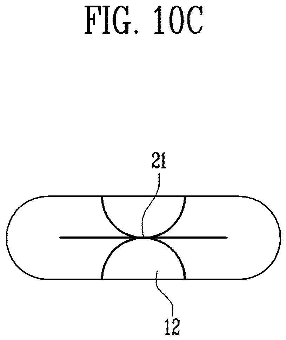

A notch portion 20 may be provided in various shapes. A protrusion portion 21 corresponding to a notch portion 20 may also be provided in various shapes. Referring to FIG. 10A, a protrusion portion 21 may be provided as a line of which central area extends in one direction and one end and the other end of which have a curvature. Referring to FIG. 10B, a central area of a protrusion portion 21 may extend in one direction, and one end and the other end may be provided as a straight line. Referring to FIG. 10C, a central region of a protrusion portion 21 may extend in one direction and may further include a line having the shape of an arc. The shape of a protrusion portion 21 is not limited as long as it may be opened in a direction from an inner surface of an exterior material to an outer surface.

Hereinafter, a battery cell 10 manufacturing method the according to the present disclosure will be described in detail.

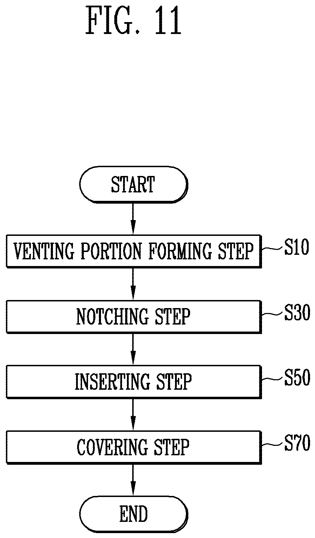

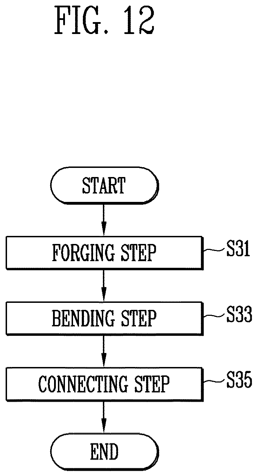

FIGS. 11 and 12 show a battery cell manufacturing method according to an embodiment of the present disclosure.

Referring to FIG. 11, a battery cell 10 manufacturing method the according to the present disclosure includes: a notching step S30, an inserting step S50, and a covering step S70.

In a notching step S30, a notch portion 20 and a protrusion portion 21 may be formed on one surface of an exterior material 12. In a notching step S30, a groove-shaped notch portion recessed from one side of an exterior material toward the outside may be formed.

Referring to FIG. 12, a notching step S30 may include: a forging step S31, a bending step S33, and a connecting step S35.

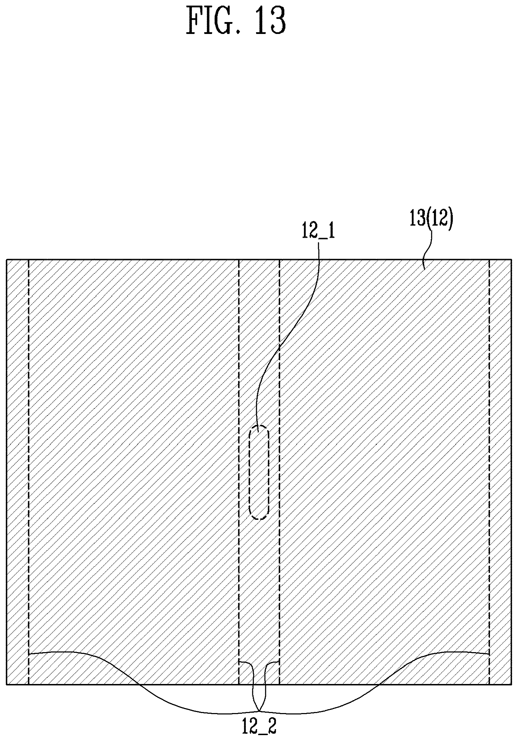

FIGS. 13 to 15 show each step of a battery cell manufacturing method according to an embodiment of the present disclosure.

Referring to FIG. 13, an exterior material 12 may include a notch area 12_1 and a bent area 12_2. A notch portion 20 and a protrusion portion 21 may be formed in a notch area 12_1. An exterior material may be bent along a bent area 12_2 to form an accommodation space therein. A plurality of bent areas 12_2 may be provided. A bent area 12_2 may be formed along one direction of an exterior material.

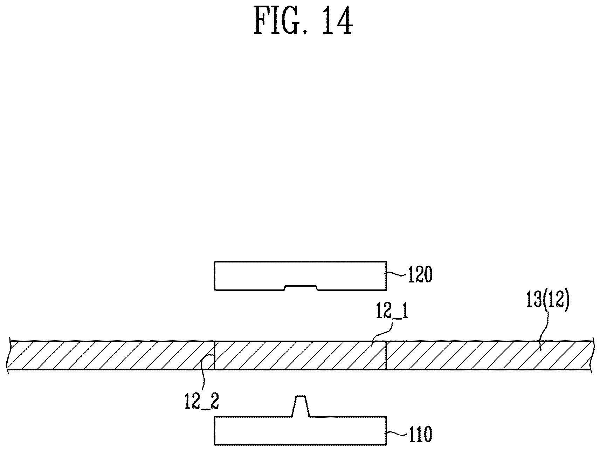

Referring to FIG. 14, in a forging step S31, a notch portion 20 and a protrusion portion 21 may be formed in a notch area 12_1 of an exterior material 12. In a forging step S31, a pressurizing portion 110, 120 may pressurize an exterior material 12 to forge the same. In a forging step S31, a pressurizing portion 110, 120 may pressurize both sides of an exterior material 12 to form a notch portion 20 and a protrusion portion 21. A pressurizing portion 110, 120 may pressurize a notch area 12_1 preset in an exterior material 12. Pressurizing portions 110, 120 may interpose an exterior material 12 therebetween and pressurize both sides of the exterior material 12. Through this, a notch portion 20 and a protrusion portion 21 having a thin thickness may be formed.

Referring to FIG. 14, a pressurizing portion 110, 120 may include a first pressurizing portion 110 with at least a part of one surface protruding and a second pressurizing portion 120 with one area recessed. A first pressurizing portion 110 may pressurize one surface of an exterior material 12 and a second pressurizing portion 120 may pressurize the other surface of the exterior material 12. The shapes of a notch portion 20 and a protrusion portion 21 may change depending on the shapes of a first pressurizing portion 110 and a second pressurizing portion 120.

After a forging step S31, a bending step S33 may be performed. In a bending step S33, an exterior material may be bent along a bending area of the exterior material. After a notch area 12_1 is forged by a pressurizing portion 110, 120, an exterior material 12 may be bent. An exterior material 12 may be bent such that one edge of the exterior material 12 and the other edge opposite to the one edge meet together. For example, an exterior material may be bent to form a hexahedral shape with both sides open.

After a bending step S33, a connecting step S35 may be performed. In a connecting step, different areas of an exterior material may be connected. A method of connecting exterior materials is not limited to any particular method. Exterior materials may be connected to each other through welding, joining (brazing), or gluing.

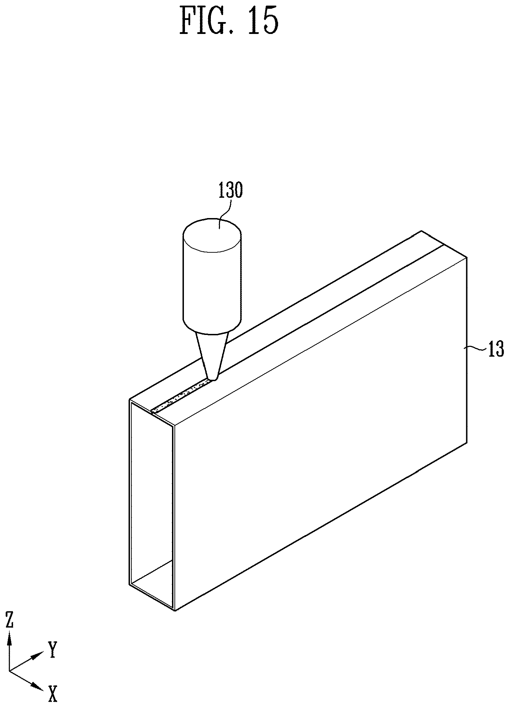

For example, referring to FIG. 15, exterior materials may be connected by laser 130. Laser may weld two edges of an exterior material. Through this, an internal space and an external space of an exterior material may be distinguished.

Referring to FIG. 11, after a notching step S30, an inserting step S50 may be performed. An electrode assembly may be inserted into a body portion 13 through an inserting step S50. After an inserting step S50, a covering step S70 in which a cap portion covers an opening portion provided in a body portion may be performed. After an electrode assembly is inserted into a body portion 13, a cap portion 14 may cover the body portion 13. Through this, an electrode assembly can be stably accommodated inside an exterior material 12.

Referring to FIG. 11, a battery cell 10 manufacturing method the according to the present disclosure may further include a venting portion forming step S10. In a venting portion forming step S10, a venting portion 30 may be formed by pressurizing at least one of an inner surface of an exterior material 12 and an outer surface of an exterior material 12.

A pressurizing portion may form a venting portion by pressurizing one surface of an exterior material. A venting portion forming step S10 may be performed simultaneously with a notching step S30. While a notch is formed by pressurizing an exterior material 12 through a pressurizing portion of which one side protrudes, a venting portion 30 may be formed by recessing one area of the exterior material 12.

The present disclosure may be modified and implemented in various forms, and its scope is not limited to the embodiments described above. Therefore, if a modified embodiment includes components of the present disclosure, it should be regarded as falling within the scope of the rights of the present disclosure.

## Claims

1. A battery cell comprising:
an electrode assembly including a cathode, an anode, and a separator;
an exterior material accommodating the electrode assembly therein;
a notch portion recessed from an inner surface of the exterior material toward an outside and defined in the form of a groove; and
a protrusion portion corresponding to the notch portion on an outer surface of the exterior material disposed in an opposite direction of the inner surface and protruding toward the outside.

2. The battery cell according to claim 1, wherein exterior material includes: a body portion accommodating the electrode assembly; and a cap portion including a cell tab that electrically connects the electrode assembly to the outside and covering the body portion, wherein the notch portion is be provided in the body portion.

3. The battery cell according to claim 1 or clam 2, wherein the exterior material further includes a venting portion formed by recession of at least one of the inner surface and the outer surface that is provided in a direction opposite to the inner surface, wherein the notch portion and the venting portion are positioned to overlap along a recession direction in which the at least one surface is recessed.

4. The battery cell according to claim 3, wherein the venting portion has a part provided in a stepped shape.

5. The battery cell according to any one of the preceding claims, wherein the notch portion and the protrusion portion include a same material as the exterior material.

6. The battery cell according to any one of the preceding claims, wherein the notch portion and the protrusion portion are formed integrally with the exterior material.

7. The battery cell according to any one of the preceding claims, wherein the notch portion is formed to extend along one direction from the inner surface.

8. The battery cell according to any one of the preceding claims, wherein the shapes of the notch portion and the protrusion portion change based on the internal pressure of the exterior material.

9. The battery cell according to claim 8, wherein when the internal pressure of the exterior material increases, the notch portion and the protrusion portion are opened.

10. The battery cell according to any one of the preceding claims, wherein the length from the notch portion to the protrusion portion along a direction in which the notch portion is recessed is 40% or less of the length of the exterior material.

11. The battery cell according to any one of the preceding claims, wherein the protrusion portion protrudes beyond an outer surface of the exterior material along a direction from an inner surface of the exterior material to an outer surface of the exterior material.

12. A battery cell manufacturing method, as a manufacturing method of a battery cell comprising an electrode assembly including a cathode, an anode, and a separator; and an exterior material including a body portion accommodating the electrode assembly and a cap portion covering the body portion, comprising:
forming a groove-shaped notch portion recessed from one surface of the exterior material toward an outside;
inserting the electrode assembly into the body portion; and
covering an opening portion disposed in the body portion by the cap portion.

13. The battery cell manufacturing method according to claim 12, further comprising forming a venting portion by pressurizing at least one surface of an inner surface of the exterior material on which the notch portion is provided and an outer surface of the exterior material.

14. The battery cell manufacturing method according to claim 12 or claim 13, wherein the forming the groove-shaped notch portion includes: forming a notch portion and a protrusion portion in an notch area of the exterior material; bending the exterior material along a bent area of the exterior material; and connecting two different areas of the exterior material.

15. The battery cell manufacturing method according to claim 14, wherein in the forming a notch portion and a protrusion portion in an notch area of the exterior material, a first pressurizing portion, at least a part of which protrudes, pressurizes one surface of the exterior material, and a second pressurizing section, one area of which is recessed, may pressurize another surface of the exterior material.
